# EUROPEAN PATENT APPLICATION

(11) **EP 3 313 003 A1**
(43) Date of publication of application: **25.04.2018**
(21) Application number: 15895428.9
(22) Date of filing: 30.10.2015
(51) Int. Cl.: H04B 7/26, H04W 88/06, H04W 76/16

(54) **DATA TRANSMISSION METHOD AND APPARATUS**

(30) Priority: 19.06.2015 CN 201510345625
(71) Applicant: ZTE Corporation, Shenzhen, Guangdong 518057 (CN)
(72) Inventor: ZHAO, Jie, Shenzhen Guangdong 518057 (CN)
(74) Representative: Brevalex
(86) International application number: PCT/CN2015/093434
(87) International publication number: WO 2016/201860

(57) **Abstract**

The present invention provides a data transmission method and apparatus. The method comprises: receiving information about a user equipment by means of an air interface connection established on a radio access technology (RAT) supported by the user equipment, wherein the information is used for determining a multi-RAT capability supported by the user equipment (S202); determining, at least according to the information, whether data sent to the user equipment is transmitted by means of multiple RATs (S204); and transmitting, when a determined result is Yes, the data to the user equipment by means of multiple RATs (S206). The present invention resolves the problem of non-achievability of ultra-reliable communication, URC, transmission of data, thereby implementing URC transmission of the data.

## Description

### TECHNICAL FIELD

The disclosure relates to the field of communications, and particularly to a data transmission method and device.

### BACKGROUND

At present, a wireless communication network cannot guarantee connectivity anytime anywhere. This is because a present commercial wireless communication technology may provide relatively high connectivity only in part of scenarios, and cannot meet requirements of users in regions with poor coverage, extreme interference and network resource overloads.

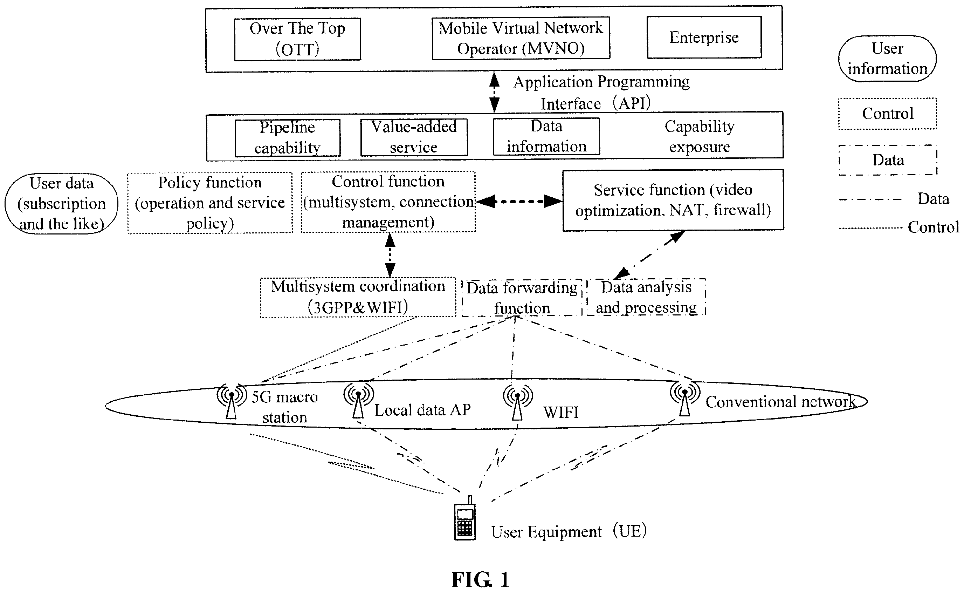

A future 5th-Generation (5G) network will be quite needed in the fields of the Internet of things, in-vehicle networks, remote information processing and automation, and has yet not been applied to these fields because reliability of a present wireless communication network cannot be guaranteed. FIG. 1 is a structure diagram of a network function-based 5G network according to a related technology. Ultra-reliable/Critical Machine Type Communication (U-MTC) is an important objective of the 5G network, different from requirements of existing communication of which users are humans, its core requirements are ultra-reliability and ultra-low delay, and a requirement on data throughput is not high.

An overall architectural characteristic of a present 2nd/3rd/4th-Generation (2/3/4G) network is that all service requirements are met by only one network architecture form, and a design objective of the network is mainly to meet wireless communication requirements of humans. An objective of a 5G network is to meet wireless communication requirements of things on the basis of the wireless wideband communication requirements of the humans, which makes technical indexes of different scenarios greatly changed. A network architecture form cannot be adapted to all service requirements, and different network architecture forms are required for different scenario requirements. Meanwhile, rapid development of a Network Function Virtualization (NFV) technology and a Software Defined Network (SDN) technology finally causes a reconstructed 5G architecture. A 5G network has the following key characteristics:
1. the network is wholly cloudified; 2. the network may be flexibly sliced (use case scenario-oriented network optimization and network isolation is supported; 3. network functions and service requirements are formed by arrangement and deployment (different network architecture forms are required for different scenario requirements); and 4. a deployment granularity of the network is refined to a function component level from a logical entity level.

At present, some organizations devoted to researches on 5G, for example, Metis, put forward a 5G architecture in some disclosed documents. The architecture of 5G has the following characteristics: focus is laid upon not network entities/nodes but network functions, the network functions are componentized, function components are organized on the basis of use cases and interfaces are defined as not interfaces of the network entities but interfaces of the function components. Functions of 5G are generally divided into the following parts: a Reliable Service Composition (RSC), a Central Management Entities (CMEs), a Radio Node Management (RNM) and Location of an Air Interface (AI). The above functions are subdivided into multiple small function components, and each small function component may be deployed at different locations (logical entities) according to requirements.

Researches show that, because of service form and scenario diversity of 5G, for meeting various requirements, multiple types of cells are required to exist. From network systems, 2G, 3G, 4G and 5G cells, Wireless Fidelity (WiFi) Access Points (APs) and the like may exist. From coverage, macro cells, microcells, Ultra Dense Network (UDN) cells and the like may exist. Therefore, there may exist a problem about fusion of a multiple RATs data duplication transmission manner. In a 5G network, a service of U-MTC and the like requires wireless communication to be ultra-reliable and ultra-low in delay, but has a relatively low requirement on data throughput. However, such Ultra-Reliable Communication (URC) cannot be ensured in a present wireless communication network.

For the problem of incapability of implementing URC transmission of data in the related technology, there is yet no effective solution at present.

### SUMMARY

In order to solve the technical problem, the disclosure provides a data transmission method and device.

According to an aspect of embodiments of the disclosure, a data transmission method is provided, which may include that: information of User Equipment(UE) is received through an AI connection established through a RAT supported by the UE, wherein the information may be configured to determine whether the UE is capable of supporting a multiple RATs data duplication transmission manner; whether data is capable of being transmitted to the UE through a multiple RATs data duplication transmission manner is determined at least according to the information; and when it is determined that data is capable of being transmitted to the UE through the multiple RATs data duplication transmission manner, the data is transmitted to the UE through the multiple RATs data duplication transmission manner.

Optionally, the information may include at least one of: UE type information, user type information, user service type information and UE capability information.

Optionally, the method may further include that: after the operation that the information of the UE is received, the information of the UE is stored.

Optionally, the method may further include that: before the operation that the information of the UE is received, the AI connection is established through the RAT supported by the UE; and a service request initiated by the UE is received through the AI connection, wherein the operation that the data is transmitted to the UE through the multiple RATs data duplication transmission manner may include that: service data requested by the service request is transmitted to the UE through the multiple RATs data duplication transmission manner.

Optionally, the operation that the data is transmitted to the UE through the multiple RATs data duplication transmission manner when it is determined that data is capable of being transmitted to the UE through the multiple RATs data duplication transmission manner may include that: whether data is capable of being transmitted to the UE through the multiple RATs data duplication transmission manner is determined; when it is determined that the data is capable of being transmitted to the UE through the multiple RATs data duplication transmission manner, radio bearers for the multiple RATs data duplication transmission are established, and first indication information is sent to the UE, the first indication information being configured to indicate that the data is transmitted to the UE through the multiple RATs data duplication transmission manner; and the data is sent to the UE through the radio bearers for the multiple RATs data duplication transmission, wherein all the data may be sent through each of the radio bearers for the multiple RATs data duplication transmission.

Optionally, the operation that the data is transmitted to the UE through the multiple RATs data duplication transmission manner when it is determined that data is capable of being transmitted to the UE through the multiple RATs data duplication transmission manner may further include that: whether the data is capable of being transmitted to the UE through the multiple RATs data duplication transmission manner is determined; when it is determined that data is not capable of being transmitted to the UE through the multiple RATs data duplication transmission manner, radio bearers for the multiple RATs data duplication transmission are established, and second indication information is sent to the UE, the second indication information being configured to indicate that the data is not transmitted to the UE through the multiple RATs data duplication transmission manner; and the data is sent to the UE through the radio bearers for the multiple RATs data duplication transmission, wherein different parts of the data may be sent through respective radio bearers for the multiple RATs data duplication transmission until the data is completely sent.

Optionally, the method may include that: when it is determined that data is not capable of being transmitted to the UE through the multiple RATs data duplication transmission manner, a radio bearer for the RAT is established, and third indication information is sent to the UE, wherein the third indication information may be configured to indicate that the data is not transmitted to the UE through the multiple RATs data duplication transmission manner; and the data is sent to the UE through the radio bearer for the RAT, wherein all the data may be sent through the radio bearer for the RAT.

According to another aspect of the embodiments of the disclosure, a data transmission device is further provided, which may include: a first receiving module, configured to receive information of UE through an AI connection established through a RAT supported by the UE, wherein the information may be configured to determine whether the UE is capable of supporting multiple RATs data duplication transmission; a first determining module, configured to determine whether data is capable of being transmitted to the UE through a multiple RATs data duplication transmission manner is determined at least according to the information; and a transmission module, configured to, when it is determined that data is capable of being transmitted to the UE through the multiple RAT, transmit the data to the UE through the multiple RATs data duplication transmission manner.

Optionally, the device may further include: a storage module, configured to store the information of the UE.

Optionally, the device may further include: a first establishment module, configured to establish the AI connection through the RAT supported by the UE; and a second receiving module, configured to receive a service request initiated by the UE through the AI connection, wherein the operation that the data is transmitted to the UE through the multiple RATs data duplication transmission manner may include that: service data requested by the service request is transmitted to the UE through the multiple RATs data duplication transmission manner.

Optionally, the transmission module may include: a first determining unit, configured to determine whether the data is capable of being transmitted to the UE through the multiple RATs data duplication transmission manner; a first establishment unit, configured to, when it is determined that data is capable of being transmitted to the UE through the multiple RATs data duplication transmission manner, establish radio bearers for the multiple RATs data duplication transmission, and send first indication information to the UE, the first indication information being configured to indicate that the data is transmitted to the UE through the multiple RATs data duplication transmission manner; and a first sending unit, configured to send the data to the UE through the radio bearers for the multiple RATs data duplication transmission, wherein all the data may be sent through each of the radio bearers for the multiple RATs data duplication transmission.

Optionally, the transmission module may further include: a second determining unit, configured to determine whether the data is capable of being transmitted to the UE through the multiple RATs data duplication transmission manner; a second establishment unit, configured to, when it is determined that the data is capable of being transmitted to the UE through the multiple RATs data duplication transmission manner, establish radio bearers for the multiple RATs data duplication transmission, and send second indication information to the UE, the second indication information being configured to indicate that the data is not transmitted to the UE through the multiple RATs data duplication transmission manner; and a second sending unit, configured to send the data to the UE through the radio bearers for the multiple RATs data duplication transmission, wherein different parts of the data may be sent through respective radio bearers for the multiple RATs data duplication transmission until the data is completely sent.

Optionally, the device may further include: a second establishment module, configured to, when it is determined that data is not capable of being transmit to the UE through the multiple RATs data duplication transmission manner, establish a radio bearer for the RAT, and send third indication information to the UE, wherein the third indication information may be configured to indicate that the data is not transmitted to the UE through the multiple RATs data duplication transmission manner; and a sending module, configured to send the data to the UE through the radio bearer for the RAT, wherein all the data may be sent through the radio bearer for the RAT.

According to the embodiments of the disclosure, the following manner is adopted: the information of the UE is received through the AI connection established through the RAT supported by the UE, wherein the information is configured to determine that the UE is capable of supporting multiple RATs data duplication transmission; the data is capable of being transmitted to the UE through the multiple RATs data duplication transmission manner is determined at least according to the information; and when it is determined that data is capable of being transmitted to the UE through the multiple RATs data duplication transmission manner, the data is transmitted to the UE through the multiple RATs data duplication transmission manner. Therefore, the problem of incapability of implementing URC transmission of data is solved, and URC transmission of the data is implemented.

### BRIEF DESCRIPTION OF DRAWINGS

The drawings described here are adopted to provide a further understanding to the disclosure, and form a part of the application. Schematic embodiments of the disclosure and descriptions thereof are adopted to explain the disclosure and not intended to form improper limits to the disclosure. In the drawings:
FIG. 1 is a structure diagram of a network function-based 5G network according to the related technology.
FIG. 2 is a flowchart of a data transmission method according to an embodiment of the disclosure.
FIG. 3 is a structure diagram of a data transmission device according to an embodiment of the disclosure.
FIG. 4 is a first optional structure diagram of a data transmission device according to an embodiment of the disclosure.
FIG. 5 is a second optional structure diagram of a data transmission device according to an embodiment of the disclosure.
FIG. 6 is a third optional structure diagram of a data transmission device according to an embodiment of the disclosure.
FIG. 7 is a fourth optional structure diagram of a data transmission device according to an embodiment of the disclosure.
FIG. 8 is a fifth optional structure diagram of a data transmission device according to an embodiment of the disclosure.
FIG. 9 is a first flowchart of a method for implementing URC in a wireless communication network according to an optional embodiment of the disclosure.
FIG. 10 is a second flowchart of a method for implementing URC in a wireless communication network according to an optional embodiment of the disclosure.

### DETAILED DESCRIPTION

The disclosure will be described below with reference to the drawings and in combination with the embodiments in detail. It is important to note that the embodiments in the application and characteristics in the embodiments may be combined without conflicts.

The other characteristics and advantages of the disclosure will be elaborated in the following specification, and moreover, partially become obvious from the specification or get understood by implementing the disclosure. The purpose and other advantages of the disclosure may be achieved and obtained through structures specially pointed out in the written specification, claims and drawings.

In order to make the solutions of the disclosure better understood by those skilled in the art, the technical solutions in the embodiments of the disclosure will be clearly and completely described below in combination with the drawings in the embodiments of the disclosure. Obviously, the described embodiments are not all embodiments but only part of embodiments of the disclosure. All other embodiments obtained by those skilled in the art on the basis of the embodiments in the disclosure without creative work shall fall within the scope of protection of the disclosure.

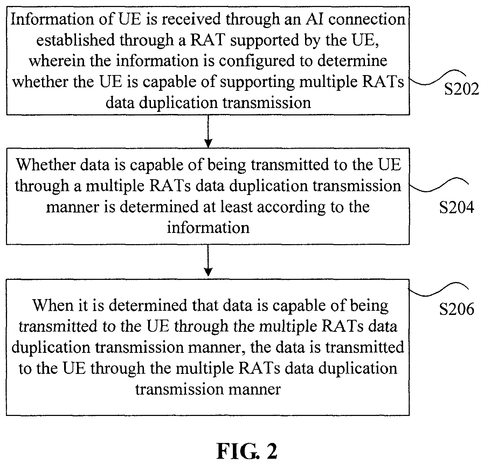

An embodiment of the disclosure provides a data transmission method. FIG. 2 is a flowchart of a data transmission method according to an embodiment of the disclosure. As shown in FIG. 2, the flow includes the following steps.

In Step S202, information of UE is received through an AI connection established through a RAT supported by the UE, wherein the information is configured to determine whether the UE is capable of supporting multiple RATs data duplication transmission.

In Step S204, whether data is capable of being transmitted to the UE through a multiple RATs data duplication transmission manner is determined at least according to the information.

In Step S206, when it is determined that data is capable of being transmitted to the UE through the multiple RATs data duplication transmission manner, the data is transmitted to the UE through the multiple RATs data duplication transmission manner.

By the above steps, a multi-RAT transmission technology is selected to transmit the data to the UE through determining whether the UE is capable of supporting the multiple RATs data duplication transmission, so that reliability of data transmission is improved, and a delay of data transmission is reduced. By the above steps, the problem of incapability of implementing URC transmission of data is solved, and thus URC transmission of the data is implemented.

Optionally, the steps may be implemented in a wireless communication network.

Optionally, the received information of the UE may be configured to determine whether the UE is capable of supporting the multiple RATs data duplication transmission manner, and a URC requirement of the UE may further be determined through user data, wherein the information includes at least one of: UE type information, user type information, user service type information and UE capability information.

Optionally, after Step S202, the information of the UE may further stored, so that the information of the UE may be called if required.

Optionally, before the information of the UE is received, the AI connection may be established through an RAT supported by the UE at first, and then through the AI connection established through the RAT, the information of the user is received, and a service request sent by the UE is received. For example, before Step S204, the AI connection is established on the RAT supported by the UE, and the service request initiated by the UE is received through the AI connection, wherein service data requested by the service request is transmitted to the UE through the multiple RATs data duplication transmission manner in Step S206.

Optionally, when it is determined that data is capable of being transmitted to the UE through the multiple RATs data duplication transmission manner, whether is capable of being transmitted to the UE through the multiple RATs data duplication transmission manner may be determined; when it is determined that the data is capable of being transmitted to the UE through the multiple RATs data duplication transmission manner, radio bearers for the multiple RATs data duplication transmission may be established, and first indication information may be sent to the UE, the first indication information being configured to indicate that the data is transmitted to the UE through the multiple RATs data duplication transmission manner; and the data is sent to the UE through the radio bearers for the multiple RATs data duplication transmission, wherein all the data is sent through each of the radio bearer for the multiple RATs data duplication transmission manner. By such a method, the same complete data is transmitted to the UE through the multiple RATs data duplication transmission manner, so that the reliability of service data transmission is improved, and the delay of service data transmission is reduced.

Optionally, under the condition that the UE receives the data which is transmitted through the multiple RATs data duplication transmission manner, the UE performs soft merging and/or selective merging on the received data.

Optionally, when it is determined data required by the UE is capable of being transmitted through the multiple RATs data duplication transmission manner, whether is capable of being transmitted to the UE through the multiple RATs data duplication transmission manner may be determined; when it is determined that data is not capable of being transmitted to the UE through the multiple RATs data duplication transmission manner, radio bearers for the multiple RATs data duplication transmission may be established, and second indication information may be sent to the UE, the second indication information being configured to indicate that data is not transmitted to the UE through the multiple RATs data duplication transmission manner; and the data is sent to the UE through the radio bearers for the multiple RATs data duplication transmission, wherein different parts of the data are sent through respective radio bearers for the multiple RATs data duplication transmission until the data is completely sent.

Optionally, when it is determined that data is not capable of being transmitted to the UE through a multiple RATs data duplication transmission manner, a radio bearer for one RAT may be established, and third indication information may be sent to the UE, wherein the third indication information is configured to indicate the data is not transmitted to the UE through the multiple RATs data duplication transmission manner; and the data is sent to the UE through the radio bearer for the RAT, wherein all the data may be sent through the radio bearer for the RAT.

Optionally, under the condition that the UE receives the data not transmitted through the multiple RATs data duplication transmission manner, the UE performs aggregation processing on the received data.

An embodiment further provides a data transmission device, which is configured to implement the abovementioned embodiment and optional implementation modes, and what has been described will not be elaborated. Modules involved in the device will be described below. For example, term "module", used below, may be a combination of software and/or hardware capable of realizing a preset function. Although the device described in the following embodiment is preferably implemented with software, implementation with hardware or a combination of the software and the hardware is also possible and conceivable.

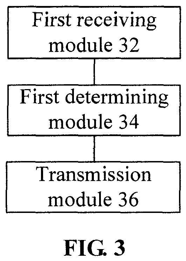

FIG. 3 is a structure diagram of a data transmission device according to an embodiment of the disclosure. As shown in FIG. 3, the device may include: a first receiving module 32, a first determining module 34 and a transmission module 36, wherein the first receiving module 32 is configured to receive information of UE through an AI connection established on a RAT supported by the UE, wherein the information is configured to determine whether the UE is capable of supporting multiple RATs data duplication transmission; the first determining module 34 is coupled to the first receiving module 32, and is configured to determine whether data is capable of being transmitted to the UE through a multiple RATs data duplication transmission manner is determined at least according to the information; and the transmission module 36 is coupled to the first determining module 34, and is configured to, when it is determined that data is capable of being transmitted to the UE through the multiple RATs data duplication transmission manner, transmit the data to the UE through the multiple RATs data duplication transmission manner.

Optionally, the information, received by the first receiving module 32, of the UE includes at least one of: UE type information, user type information, user service type information and UE capability information.

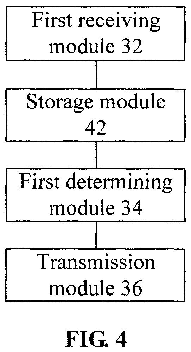

FIG. 4 is a first optional structure diagram of a data transmission device according to an embodiment of the disclosure. As shown in FIG. 4, optionally, the device further includes: a storage module 42, coupled to the first receiving module 32 and the first determining module 34 and configured to store the information of the UE.

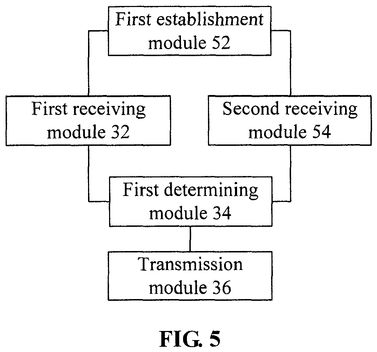

FIG. 5 is a second optional structure diagram of a data transmission device according to an embodiment of the disclosure. As shown in FIG. 5, optionally, the device further includes: a first establishment module 52 and a second receiving module 54, wherein the first establishment module 52 is coupled to the first receiving module 32, and is configured to establish the AI connection through the RAT supported by the UE; and the second receiving module 54 is coupled to the first establishment module 52, and is configured to receive a service request initiated by the UE through the AI connection, wherein the operation that the data is transmitted to the UE through the multiple RATs data duplication transmission manner includes that: service data requested by the service request is transmitted to the UE through the multiple RATs data duplication transmission manner.

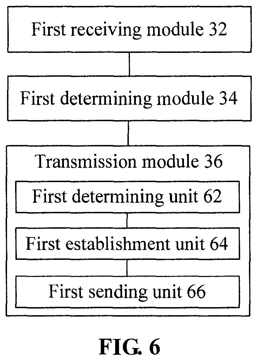

FIG. 6 is a third optional structure diagram of a data transmission device according to an embodiment of the disclosure. As shown in FIG. 6, optionally, the transmission module 36 includes: a first determining unit 62, a first establishment unit 64 and a first sending unit 66, wherein the first determining unit 62 is coupled to the first determining module 34, and is configured to determine determine whether the data is capable of being transmitted to the UE through the multiple RATs data duplication transmission manner; the first establishment unit 64 is coupled to the first determining unit 62, and is configured to, when it is determined that data is capable of being transmitted to the UE through the multiple RATs data duplication transmission manner, establish radio bearers for the multiple RATs data duplication transmission, and send first indication information to the UE, the first indication information being configured to indicate the data is transmitted to the UE through the multiple RATs data duplication transmission manner; and the first sending unit 66 is coupled to the first establishment unit 64, and is configured to send the data to the UE through the radio bearers for the multiple RATs data duplication transmission, wherein all the data is sent through each of the radio bearers for the multiple RATs data duplication transmission manner.

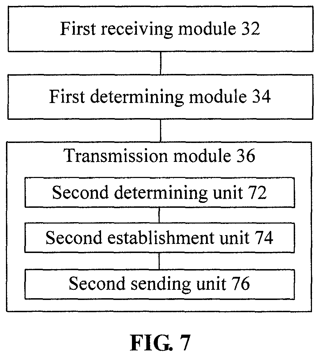

FIG. 7 is a fourth optional structure diagram of a data transmission device according to an embodiment of the disclosure. As shown in FIG. 7, optionally, the transmission module 36 further includes: a second determining unit 72, a second establishment unit 74 and a second sending unit 76, wherein the second determining unit 72 is coupled to the first determining module 34, and is configured to determine determine whether the data is capable of being transmitted to the UE through the multiple RATs data duplication transmission manner ; the second establishment unit 74 is coupled to the second determining unit 72, and is configured to, when it is determined that the data is capable of being transmitted to the UE through the multiple RATs data duplication transmission manner, establish radio bearers for the multiple RATs data duplication transmission, and send second indication information to the UE, the second indication information being configured to indicate the data is not transmitted to the UE through the multiple RATs data duplication transmission manner; and the second sending unit 76 is coupled to the second establishment unit 74, and is configured to send the data to the UE through the radio bearers for the multiple RATs data duplication transmission, wherein different parts of the data are sent through respective radio bearers of the multiple RATs data duplication transmission manner until the data is completely sent.

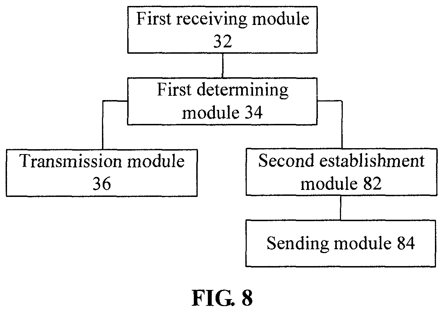

FIG. 8 is a fifth optional structure diagram of a data transmission device according to an embodiment of the disclosure. As shown in FIG. 8, optionally, the device further includes: a second establishment module 82 and a sending module 84, wherein the second establishment module 82 is coupled to the first determining module 34, and is configured to, when it is determined by the first determining module 34 that data is not capable of being transmit to the UE through a multiple RATs data duplication transmission manner, establish a radio bearer for one RAT, and send third indication information to the UE, wherein the third indication information is configured to indicate that the data is not transmitted to the UE through the multiple RATs data duplication transmission manner; and the sending module 84 is coupled to the second establishment module 82, and is configured to send the data to the UE through the radio bearer for the RAT, wherein all the data is sent through the radio bearer for the RAT.

In addition, each function unit in each embodiment of the disclosure may be integrated in a processing unit, each unit may also independently and physically exist, two or more than two units may further be integrated in a unit. The integrated unit may be implemented in form of hardware, and may also be implemented in form of software function unit.

In order to describe the embodiments of the disclosure more clearly, descriptions and explanations will be made below in combination with an optional embodiment.

The optional embodiment of the disclosure provides a method and system for implementing URC. The method includes the following implementation steps.

In Step 1, an AI connection on a certain RAT1 is established between UE and a service network so as to transmit dedicated signaling, enable a contact channel between the UE and the service network and transmit signaling data.

In Step 2, the UE initiates a service request through the AI connection on the RAT1.

In Step 3, through the AI connection on the RAT1, a network side acquires and stores information (for example: type information of the UE and/or type information of a user and/or service type information of the user and/or capability information of the UE) reported by the UE.

In Step 4, the network side determines whether radio bearers for the multiple RATs data duplication transmission manner are required to be established for radio bearers of a user service.

Wherein, under the condition that radio bearers for the multiple RATs data duplication transmission manner are required to be established for radio bearers of a user service, the radio bearers of the user service are established on the RAT1 and other RATs; and under the condition that radio bearers for the multiple RATs data duplication transmission manner are not required to be established for radio bearers of a user service, the radio bearer of the user service is established only on the RAT1.

In Step 5, under the condition that the radio bearers on the multiple RATs data duplication transmission manner are determined to be established for the radio bearers of the user service in Step 4, whether downlink data of the user service is capable of being transmitted through the multiple RATs data duplication transmission manner is determined.

Under the condition that downlink data of the user service is capable of being transmitted through the multiple RATs data duplication transmission manner, the service data is transmitted through the multiple RATs data duplication transmission manner (that is, the same service data is transmitted through different RATs): it is indicated that the downlink data of the user service is transmitted through the multiple RATs data duplication transmission manner; when the downlink data of the user service is sent, an upper-layer service processing center transmits the downlink data of the user service to a multi-RAT data processing function component; the multi-RAT data processing function component simultaneously sends the same downlink data of the user service to the bearers for the multiple RATs data duplication transmission according to a policy; and the bearers for the multiple RATs data duplication transmission simultaneously send the same downlink data of the user service to the UE.

Under the condition that the UE receives the same downlink data, simultaneously sent by the bearers for the multiple RATs data duplication transmission, of the user service, soft merging or selective merging is performed on the received downlink service data.

Under the condition that downlink data of the user service is not capable of being transmitted through the multiple RATs data duplication transmission manner, the multiple RATs data duplication transmission manner is not adopted (that is, transmission of part of service data is performed on the multiple RATs data duplication transmission manner, and is combined into transmission of complete data): a wireless communication network system establishes the radio bearers of the user service, and indicates that the multiple RATs data duplication transmission manner is not adopted for the downlink data of the user service; when the downlink data of the user service is sent, the upper-layer service processing center transmits the downlink data of the user service to the multi-RAT data processing function component; the multi-RAT data processing function component simultaneously and completely sends the same downlink data of the user service to the bearers for the multiple RATs data duplication transmission according to different policies (complete sending with one RAT or respective sending of a part with each of the multiple RATs data duplication transmission manner may be selected according to a wireless condition, i.e. a data aggregation manner); and the radio bearers for the multiple RATs data duplication transmission send the downlink data of the user service to the UE.

Under the condition that the UE receives the downlink data, sent by the bearers for the multiple RATs data duplication transmission, of the user service, data aggregation processing and the like is performed on the received downlink service data, and at this moment, there is no diversity gain.

In Step 6, the network side performs radio bearer transmission of the user service according to a determining result.

Compared with a conventional art, the optional embodiment of the disclosure provides the method and system for implementing URC in a wireless communication network. During multi-RAT hybrid networking, URC sending may be performed on the downlink data of the user service for a URC requirement of the user service.

In order to make the purpose, technical solutions and advantages of the disclosure clearer, the technical solutions of the disclosure will further be described below in combination with the drawings and a specific embodiment in detail for those skilled in the art to better understand and implement the disclosure. However, the listed embodiment is not a limit to the disclosure. It is important to note that the embodiments in the application and the characteristics in the embodiments may be combined without conflicts.

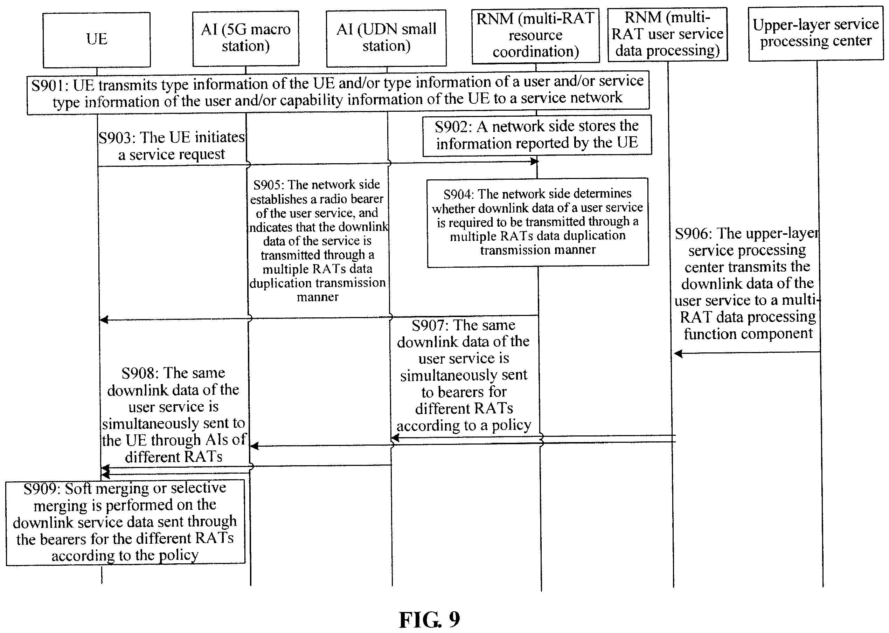

FIG. 9 is a first flowchart of a method for implementing URC in a wireless communication network according to an optional embodiment of the disclosure, wherein an "RNM (multi-RAT resource coordination)", an "RNM (multi-RAT user service data processing", an "upper-layer service processing center" and the like all refer to function components, and may be deployed in different logical entities according to a scenario.

In a tight coupling mode, both the "RNM (multi-RAT resource coordination)" and the "RNM (multi-RAT user service data processing)" may be deployed in a 5G macro station.

In a loose coupling mode, both the "RNM (multi-RAT resource coordination)" and the "RNM (multi-RAT user service data processing)" may be deployed in an independent local gateway. The "upper-layer service processing center" may be deployed in a core network.

In a factory industrial control U-MTC scenario, a 5G network is deployed with access of different RATs such as a 5G macro station and a UDN small station, and is required to meet wireless communication requirements of ultra-reliability and ultra-low delay.

The implementation flow of the optional embodiment of the disclosure includes the following steps.

In S900, an AI connection on a certain RAT1 is established between UE and a service network to transmit signaling.

In S901, the UE transmits information to the service network through the AI connection on the RAT1: type information of the UE is an industrial control UE type; and the UE has a capability of supporting multi-RAT uplink diversity transmission of a 5G macro station and a UDN small station.

In S902, a network side stores the information reported by the UE.

In S903, the UE initiates a service request through the AI connection on the RAT1.

In S904, after receiving the service request of a user, the network side makes a determining according to information that the type information of the UE is the industrial control UE type, the UE has the capability of supporting multi-RAT downlink diversity transmission of the 5G macro station and the UDN small station, a region where the UE is located is covered by the 5G macro station and the UDN small station and network equipment has a capability of supporting multi-RAT downlink diversity transmission of the 5G macro station and the UDN small station, and adopts the multiple RATs data duplication transmission manner (that is, the same service data is transmitted through different RATs) for downlink data of a user service to improve reliability and reduce a delay.

In S905, the network side establishes a radio bearer of the user service, and indicates that the multiple RATs data duplication transmission manner is adopted for the downlink data of the service.

In S906, when the downlink data of the user service is sent, the upper-layer service processing center transmits the downlink data of the user service to a multi-RAT data processing function component.

In S907, the multi-RAT data processing function component simultaneously sends the same downlink data of the user service to bearers for different RATs according to a policy.

In S908, the same downlink data of the user service is simultaneously sent to the UE through AIs of different RATs.

In S909, after receiving the same downlink data, simultaneously sent through the AIs of the different RATs, of the user service, the UE performs soft merging or selective merging on the received downlink service data.

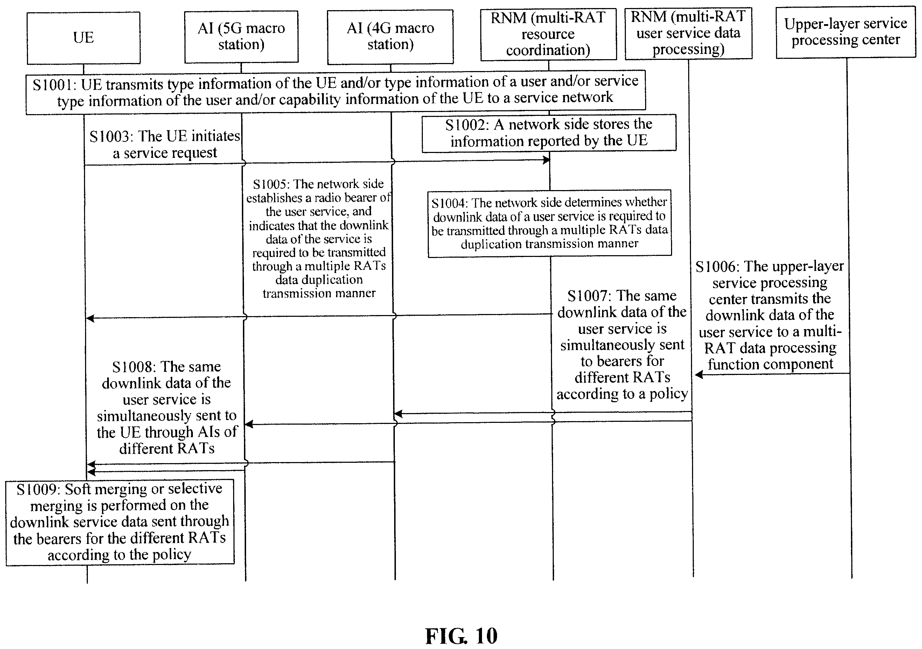

FIG. 10 is a second flowchart of a method for implementing URC in a wireless communication network according to an optional embodiment of the disclosure, wherein an "RNM (multi-RAT resource coordination)", an "RNM (multi-RAT user service data processing", an "upper-layer service processing center" and the like all refer to function components, and may be deployed in different logical entities according to a scenario.

In a tight coupling mode, both the "RNM (multi-RAT resource coordination)" and the "RNM (multi-RAT user service data processing)" may be deployed in a 5G macro station.

In a loose coupling mode, both the "RNM (multi-RAT resource coordination)" and the "RNM (multi-RAT user service data processing)" may be deployed in an independent local gateway. The "upper-layer service processing center" may be deployed in a core network.

In a smart grid control U-MTC scenario, a 5G network is deployed with access of different RATs such as a 5G macro station and a 4G macro station, a 4G network provides basic coverage, a 5G network provides hotspot enhanced coverage, and wireless communication requirements of ultra-reliability and ultra-low delay are required to be met.

The implementation flow of the optional embodiment of the disclosure includes the following steps.

In S1000, an AI connection on a certain RAT1 is established between UE and a service network to transmit signaling. In S1001, the UE transmits information to the service network through the AI connection on the RAT1: type information of a user is a smart grid control user type; and the UE has a capability of supporting multi-RAT downlink diversity transmission of a 5G macro station and a 4G macro station.

In S1002, a network side stores the information reported by the UE.

In S1003, the UE initiates a service request through the AI connection on the RAT1.

In S1004, after receiving the service request of the user, the network side makes a determination according to information that the type information of the user is the smart grid control user type, the UE has the capability of supporting multi-RAT downlink diversity transmission of the 5G macro station and the 4G macro station, a region where the UE is located is covered by the 5G macro station and the 4G macro station and network equipment has a capability of supporting multi-RAT downlink diversity transmission of the 5G macro statifon and the 4G macro station, and adopts the multiple RATs data duplication transmission manner (that is, the same service data is transmitted through different RATs) for downlink data of a user service to improve reliability and reduce a delay.

In S1005, the network side establishes a radio bearer of the user service, and indicates that the multiple RATs data duplication transmission manner is adopted for the downlink data of the service.

In S1006, when the downlink data of the user service is sent, the upper-layer service processing center transmits the downlink data of the user service to a multi-RAT data processing function component.

In S1007, the multi-RAT data processing function component simultaneously sends the same downlink data of the user service to bearers for different RATs according to a policy.

In S1008, the same downlink data of the user service is simultaneously sent to the UE through AIs of different RATs.

In S1009, after receiving the same downlink data, simultaneously sent through the AIs of the different RATs, of the user service, the UE performs soft merging or selective merging on the received downlink service data.

In another embodiment, software is further provided, which is configured to execute the technical solutions described in the abovementioned embodiments and optional implementation modes.

In another embodiment, a storage medium is further provided, in which the abovementioned software is stored, the storage medium including, but not limited to: an optical disk, a floppy disk, a hard disk, an erasable memory and the like.

### INDUSTRIAL APPLICABILITY

According to the embodiments of the disclosure, the following manner is adopted: the information of the UE is received through the AI connection established through the RAT supported by the UE, wherein the information is configured to determine whether the UE is capable of supporting multiple RATs data duplication transmission; whether data is capable of being transmitted to the UE through a multiple RATs data duplication transmission manner is determined at least according to the information; and when it is determined that data to be sent to the UE is capable of being transmitted through the multiple RATs data duplication transmission manner, the data is transmitted to the UE through the multiple RATs data duplication transmission manner. Therefore, the problem of incapability of implementing URC transmission of data is solved, and URC transmission of the data is implemented.

It is important to note that terms "first", "second" and the like in the specification, claims and drawings of the disclosure are adopted not to describe a specific sequence or order but to distinguish similar objects. It should be understood that objects used like this may be exchanged under a proper condition for implementation of the embodiments, described here, of the disclosure in a sequence besides those sequences shown or described here. In addition, terms "include" and "have" and any transformation thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment.

Apparently, those skilled in the art should know that each module or each step of the disclosure may be implemented by a universal computing device, and the modules or steps may be concentrated on a single computing device or distributed on a network formed by multiple computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. Therefore, the disclosure is not limited to any specific hardware and software combination.

The above is only the optional embodiment of the disclosure and not intended to limit the disclosure. For those skilled in the art, the disclosure may have various modifications and variations. Any modifications, equivalent replacements, improvements and the like made within the spirit and principle of the disclosure shall fall within the scope of protection of the disclosure.

## Claims

1. A data transmission method, **characterized in that** the method comprises:
receiving information of User Equipment, UE, through an Air Interface, AI, connection established through a Radio Access Technology, RAT, supported by the UE, wherein the information is configured to determine whether the UE is capable of supporting multiple RATs data duplication transmission;
determining whether data is capable of being transmitted to the UE through a multiple RATs data duplication transmission manner at least according to the information; and
when it is determined that data is capable of being transmitted to the UE through the multiple RATs data duplication transmission manner, transmitting the data to the UE through the multiple RATs data duplication transmission manner.

2. The method according to claim 1, wherein the information comprises at least one of:
UE type information, user type information, user service type information and UE capability information.

3. The method according to claim 1, after receiving the information of the UE, further comprising:
storing the information of the UE.

4. The method according to claim 1, before receiving the information of the UE, further comprising:
establishing the AI connection through the RAT supported by the UE; and
receiving a service request initiated by the UE through the AI connection,
wherein transmitting the data to the UE through the multiple RATs data duplication transmission manner comprises: transmitting service data requested by the service request to the UE through the multiple RATs data duplication transmission manner.

5. The method according to any one of claims 1-4, wherein transmitting the data to the UE through the multiple RATs data duplication transmission manner when it is determined that data is capable of being transmitted to the UE through the multiple RATs data duplication transmission manner comprises:
determining whether data is capable of being transmitted to the UE through the multiple RATs data duplication transmission manner;
when it is determined that the data is capable of being transmitted to the UE through the multiple RATs data duplication transmission manner, establishing radio bearers for the multiple RATs data duplication transmission, and sending first indication information to the UE, the first indication information being configured to indicate that the data is transmitted to the UE through the multiple RATs data duplication transmission manner; and
sending the data to the UE through the radio bearers for the multiple RATs data duplication transmission, wherein all the data is sent through each of the radio bearers for the multiple RATs data duplication transmission.

6. The method according to any one of claims 1-4, wherein transmitting the data to the UE through the multiple RATs data duplication transmission manner when it is determined that data is capable of being transmitted to the UE through the multiple RATs data duplication transmission manner comprises:
determining whether the data is capable of being transmitted to the UE through the multiple RATs data duplication transmission manner;
when it is determined that data is not capable of being transmitted to the UE through the multiple RATs data duplication transmission manner, establishing radio bearers for the multiple RATs data duplication transmission, and sending second indication information to the UE, the second indication information being configured to indicate that data is not transmitted to the UE through the multiple RATs data duplication transmission manner; and
sending the data to the UE through the radio bearers for the multiple RATs data duplication transmission, wherein different parts of the data are sent through respective radio bearers for the multiple RATs data duplication transmission until the data is completely sent.

7. The method according to any one of claims 1-4, further comprising:
when it is determined that data is not capable of being transmitted to the UE through the multiple RATs data duplication transmission manner, establishing a radio bearer for the RAT, and sending third indication information to the UE, wherein the third indication information is configured to indicate that the data is not transmitted to the UE through the multiple RATs data duplication transmission manner; and
sending the data to the UE through the radio bearer for the RAT, wherein all the data is sent through the radio bearer of the RAT.

8. A data transmission device, **characterized in that** the device comprises:
a first receiving module, configured to receive information of User Equipment, UE, through an Air Interface, AI, connection established through a Radio Access Technology, RAT, supported by the UE, wherein the information is configured to determine whether the UE is capable of supporting multiple RATs data duplication transmission;
a first determining module, configured to determine whether data is capable of being transmitted to the UE through a multiple RATs data duplication transmission manner is determined at least according to the information; and
a transmission module, configured to, when it is determined that data is capable of being transmitted to the UE through the multiple RATs data duplication transmission manner, transmit the data to the UE through the multiple RATs data duplication transmission manner.

9. The device according to claim 8, further comprising:
a storage module, configured to store the information of the UE.

10. The device according to claim 8, further comprising:
a first establishment module, configured to establish the AI connection through the RAT supported by the UE; and
a second receiving module, configured to receive a service request initiated by the UE through the AI connection,
wherein transmitting the data to the UE through the multiple RATs data duplication transmission manner comprises: sending service data requested by the service request to the UE through the multiple RATs data duplication transmission manner.

11. The device according to any one of claims 8-10, wherein the transmission module comprises:
a first determining unit, configured to determine whether the data is capable of being transmitted to the UE through the multiple RATs data duplication transmission manner;
a first establishment unit, configured to, when it is determined that data is capable of being transmitted to the UE through the multiple RATs data duplication transmission manner, establish radio bearers for the multiple RATs data duplication transmission, and send first indication information to the UE, the first indication information being configured to indicate that the data is transmitted to the UE through the multiple RATs data duplication transmission manner; and
a first sending unit, configured to send the data to the UE through the radio bearers for the multiple RATs data duplication transmission, wherein all the data is sent through each of the radio bearers for the multiple RATs data duplication transmission.

12. The device according to any one of claims 8-10, wherein the transmission module further comprises:
a second determining unit, configured to determine whether the data is capable of being transmitted to the UE through the multiple RATs data duplication transmission manner;
a second establishment unit, configured to, when it is determined that the data is capable of being transmitted to the UE through the multiple RATs data duplication transmission manner, establish radio bearers for the multiple RATs data duplication transmission, and send second indication information to the UE, the second indication information being configured to indicate that the data is not transmitted to the UE through the multiple RATs data duplication transmission manner; and
a second sending unit, configured to send the data to the UE through the radio bearers for the multiple RATs data duplication transmission, wherein different parts of the data are sent through respective radio bearers for the multiple RATs data duplication transmission until the data is completely sent.

13. The device according to any one of claims 8-10, further comprising:
a second establishment module, configured to, when it is determined that data is not capable of being transmit to the UE through the multiple RATs data duplication transmission manner, establish a radio bearer for the RAT, and send third indication information to the UE, wherein the third indication information is configured to indicate that the data is not transmitted to the UE through the multiple RATs data duplication transmission manner; and
a sending module, configured to send the data to the UE through the radio bearer for the RAT, wherein all the data is sent through the radio bearer for the RAT.
